# EUROPEAN PATENT APPLICATION

(11) **EP 1 396 741 A1**
(43) Date of publication of application: **10.03.2004**
(21) Application number: 02360257.6
(22) Date of filing: 04.09.2002
(51) Int. Cl.: G02B 6/122

(54) **Stray light suppression structures using a waverguide and angled, deep etched trendches filled with an absorbing material**

(71) Applicant: Avanex Corporation, Fremont, CA 94538 (US)
(72) Inventor: Schreiber, Gerhard, Dr., 70825 Korntal (DE); Kersten, Peter, Dr., 71287 Weisstach (DE)
(74) Representative: Haines, Miles John

(57) **Abstract**

The present invention relates to an optical waveguide structure comprising a waveguide input section (14) and a waveguide output section (16), at least one of which having a straight geometry, and a single trench (26) formed adjacent to one of said sections (14, 16). The trench is adapted to absorb stray light within said structure and extends obliquely relative to the adjacent section (14, 16).

## Description

The present invention relates to an optical waveguide structure.

Optical waveguide structures are part of planar photonic devices, for example, comprising a plurality of optical components such as multiplexers, switches, etc. The optical waveguides within such a photonic device are employed for carrying light from one optical component to the other, for example. In the past, the number of optical components formed within a photonic device has been increased continuously. Such an increase of optical components integrated in a single photonic device goes hand in hand with an increase of stray light generated by particular optical components. This stray light, however, may interfere with other optical components of the optical device and hence can deteriorate the overall performance of the device. Therefore, there is a need for measurements to alleviate or eliminate stray light.

WO 01/33263 A1 discloses a method of filtering optical noise generated by an optical component in a planar photonic device. The planar photonic device in which this method is implemented comprises refractive index change regions. These regions are placed symmetrically on either side of the path of the light downstream from the optical component and are adapted to prevent forward propagation of the light outside said path. The refractive index change regions can be constituted by trenches or by regions possessing saw tooth-shaped elements. This prior art document explicitly teaches to use refractive index change regions in a symmetrical configuration, that is on both sides of for example an optical waveguide carrying the light. Due to the necessity of a symmetrical configuration of the refractive index change regions, the design of the planar photonic device is strongly restricted.

US 6,212,307 B1 discloses an integrated optical device which has an optical microguide of index no between two media of respective refractive indices n₁ and n_{1'}, such that n₁ < no and n_{1'} > n₀, and filtering means constituted by at least one reflector element placed on at least one side of the microguide, the reflector elements having at least one element etched in layers of index n₁ and/or n_{1'} and/or n₀. In this approach, the problem of stray light is overcome by reflector elements which reflect the stray light away from the microguide.

One disadvantage of this approach is that the reflecting elements are relatively large due to the fact that they must extend in an oblique direction with respect to the microguide.

A further disadvantage is that the stray light reflected by the reflector elements may interfere with other microguides within the integrated optical device. Particularly, this is a serious problem in highly integrated optical devices having a plurality of optic components.

In view of the above, it is an object of the present invention to provide an optical waveguide structure which overcomes the problems mentioned above.

This object is solved by an optical waveguide structure comprising a waveguide input section and a waveguide output section, at least one of which having a straight geometry, and a single trench formed adjacent to one of said sections, said trench being adapted to absorb stray light within said structure and extending obliquely relative to the adjacent section.

One advantage of this optical waveguide structure is that particular design restrictions are eliminated because a symmetric geometry of the trenches is not necessary any more.

A further advantage is that the trench absorbs stray light which means that the stray light may not interfere with other optical components within an optical device.

In a preferred embodiment, the trench is filled with a material capable of absorbing stray light. Preferably, said material is selected such that it has the same refractive index as the material surrounding said trench.

This measure has the advantage that an impedance matching may be achieved.

In a further preferred embodiment, said input and said output sections are arranged offset to each other thereby forming an S-bend waveguide.

It has been shown that the present invention is particularly effective in a configuration where the waveguide is formed as an S-bend waveguide.

In a further preferred embodiment, the material which fills the trench is a polymer. It is further preferred that at least two trenches are provided in an asymmetric configuration with respect to said sections. Further, said input and output sections are formed within a core layer sandwiched between an upper and a lower layer, and said at least one trench extends through said lower, core and upper layers.

Further features and advantages can be taken from the following description and the enclosed drawings.

It is to be understood that the features mentioned above and those yet to be explained below can be used not only in the respect combinations indicated, but also in other combinations or in isolation, without leaving the scope of the present invention.

Embodiments of the invention are shown in the drawings and will be explained in more detail in the description below with reference to same. In the drawings:
- Fig. 1: is a schematic plan view of an optical waveguide structure according to a first embodiment;
- Fig. 2: is a schematic sectional view of an optical waveguide structure;
- Fig. 3: is a schematic plan view of an optical waveguide structure according to a second embodiment; and
- Fig. 4: is a schematic plan view of an optical waveguide structure according to a third embodiment.

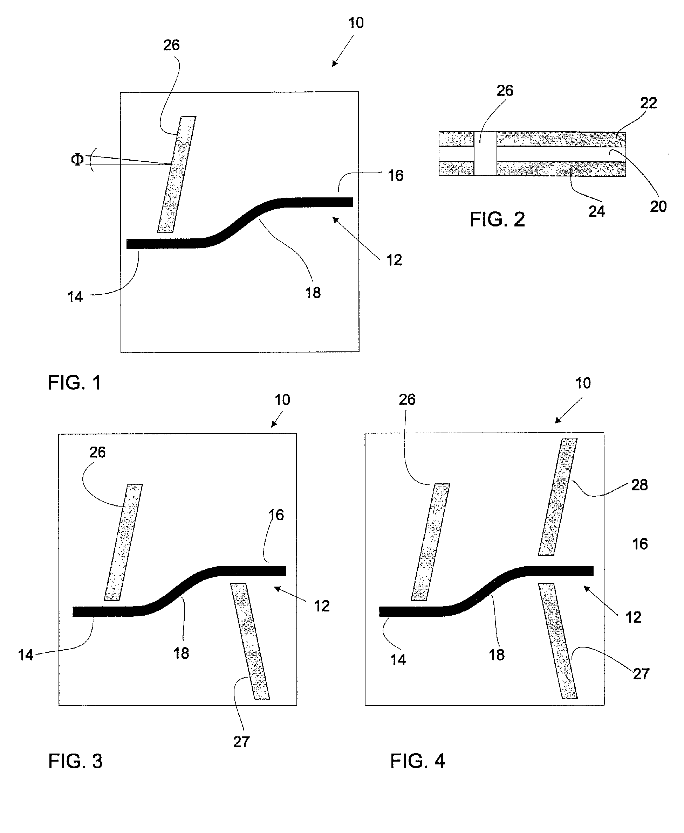

In Fig. 1, a detail of an integrated planar optical device is shown and referenced with reference numeral 10. The integrated optical device 10 generally comprises a plurality of optical components, such as couplers, switches, multiplexers, etc. The optical device 10 also comprises optical waveguides guiding light from one component to another.

Fig. 1 now illustrates such an optical waveguide indicated with reference numeral 12. The optical waveguide 12 comprises an input section 14, an output section 16 and a section 18 connecting both. The input section 14 and the output section 16 each has a straight geometry and are formed in the same plane. As it is apparent from Fig. 1, the input and output sections 14, 16 are offset to each other and the section 18 connecting both is formed as an S-bend. However, it is to be understood that the offset may also be zero with the result that the section 18 has a straight configuration.

Referring to Fig. 2, the waveguide 12 is formed in a core layer 20 which is sandwiched between an upper and lower cladding or confinement layer 22 and 24, respectively. This three layer-structure is mounted on a substrate, which is not shown. The light irradiated by an optical component is guided in the core layer by reflection at the transition to the upper and lower layers 22, 24. This kind of planar optical device is generally known so that it is not necessary to explain it in more detail.

Referring back to Fig. 1, the integral optical device 10 comprises a trench 26 which extends obliquely with respect to the straight input section 14. Hence, the extended trench 26 is tilted by an angle φ from a position perpendicular to the input section. As shown in Fig. 2, the trench 26 extends through the upper and lower layers 22, 24 and the core layer 20. The trench 26 is formed within the optical device 10 by using known methods such as etching techniques, photolitographic techniques, etc.

The trench 26 is filled with a material which is capable of absorbing light of predetermined wavelengths. With other words, the material is selected such that it may absorb stray light within the optical device 10. The material is for example a polymer. However, other materials, whether gaseous, liquid or solid, may be possible. However, a solid material is preferred, particularly a material having the same refractive index as the surrounding material, in order to achieve impedance matching.

As it is shown in Fig. 1, the optical device 10 comprises only a single trench 26. As to eliminate stray light traveling in the direction of the output section 16, one such trench 26 is sufficient.

As already mentioned, the trench 26 is tilted by an angle φ. The value of this angle φ may be selected depending on the requirements for the optical device. Further, the position of the trench 26 relative to the waveguide 12 may also be freely selected. Nevertheless, it is preferred to provide the trench 26 as close as possible to the waveguide 12.

The trench 26 - as already mentioned - absorbs any stray light traveling from the input side in the direction to the output side of the optical device 10. Particularly, the trench 26 prevents that stray light interferes with light traveling through the waveguide 12.

In Figs. 3 and 4, further configurations of trenches 26 within an optical device 10 are shown. For example, in Fig. 3, a second trench 27 is provided adjacent to the output section 16 and with respect to the first trench 26 on the opposite side of the waveguide 12. The structure of this trench 27 equals the structure of first trench 26. Further, trench 27 is also tilted by an angle φ which, however, does not necessarily equal the angle φ of the first trench 26.

A further configuration is shown in Fig. 4 and comprises three trenches 26, 27 and 28. Compared with the configuration of Fig. 3, the additional trench 28 is provided on the same side of the waveguide 12 as the first trench 26. Further, the third trench 28 is also tilted by an angle φ which may be different to the angle of the other trenches.

It is to be noted that the trenches have not to be provided in a symmetrical manner with respect to the waveguide 12. Particularly, it is sufficient for suppressing stray light to provide just one trench, as shown in Fig. 1.

## Claims

1. Optical waveguide structure comprising a waveguide input section (14) and a waveguide output section (16), at least one of which having a straight geometry, and a single trench (26) formed adjacent to one of said sections (14, 16), said trench being adapted to absorb stray light within said structure and extending obliquely relative to the adjacent section (14, 16).

2. The optical waveguide structure of claim 1, **characterized in that** said trench (26) is filled with a material.

3. The optical waveguide structure of claim 2, **characterized in that** said material is selected such that it has the same refractive index as the material surrounding said trench.

4. The optical waveguide structure of any of the preceding claims, **characterized in that** said input and output sections (14, 16) are arranged offset to each other thereby forming an S-bend waveguide (12).

5. The optical waveguide structure of claim 2, **characterized in that** said material is a polymer.

6. The optical waveguide structure of any of the preceding claims, **characterized in that** at least two trenches (26, 27) are provided in an asymmetric configuration with respect to said sections (14, 16).

7. The optical waveguide structure of any of the preceding claims, **characterized in that** said input and output sections (14, 16) are formed within a core layer (20) sandwiched between an upper and a lower layer (20, 22), and said at least one trench (26, 27, 28) extends through said lower, core and upper layers (20, 22, 24).
